# EUROPÄISCHE PATENTANMELDUNG

(11) **EP 0 972 974 A2**
(43) Veröffentlichungstag der Anmeldung: **19.01.2000**
(21) Anmeldenummer: 99111179.0
(22) Anmeldetag: 09.06.1999
(51) Int. Cl.: F16J 15/34

(54) **Turbomaschine mit Gleitringdichtungen**

(30) Priorität: 16.07.1998 DE 19831988
(71) Anmelder: ABB PATENT GmbH, 68309 Mannheim (DE)
(72) Erfinder: Urlichs, Karl, Dr.-Ing., 90482 Nürnberg (DE)
(74) Vertreter: Miller, Toivo

(57) **Zusammenfassung**

Es wird eine Turbomaschine mit einem Frischdampfeingang (FD), einem Abdampfausgang (AD) und mindestens zwei gasgeschmierten Gleitringdichtungen (Wa, Wb) zur Abdichtung des Turbinengehäuses (TG) im Bereich einer den Rotor (R) tragenden Turbinenwelle (TW) vorgeschlagen, wobei jede Gleitringdichtung einen mit dem Rotor (R) rotierenden Gegenring (1) und einen nicht rotierenden Gleitring (2) besitzt, der beweglich durch eine Sekundärdichtung (3) mit dem Turbinengehäuse (TG) bzw. einem Dichtungsgehäuse (10) verbunden ist. Um Fehlfunktionen der Sekundärdichtungen (3) und der Gleitringdichtungen (Wa, Wb) zu verhindern, ist eine Einrichtung vorgesehen, welche zwangsweise und in regelmäßigen zeitlichen Abständen axiale Relativbewegungen zwischen Rotor (R) und dem Turbinengehäuse (TG) bzw. Dichtungsgehäuse (10) bewirkt.

## Beschreibung

Die Erfindung bezieht sich auf eine Turbomaschine mit Gleitringdichtungen gemäß dem Oberbegriff des Anspruchs 1.

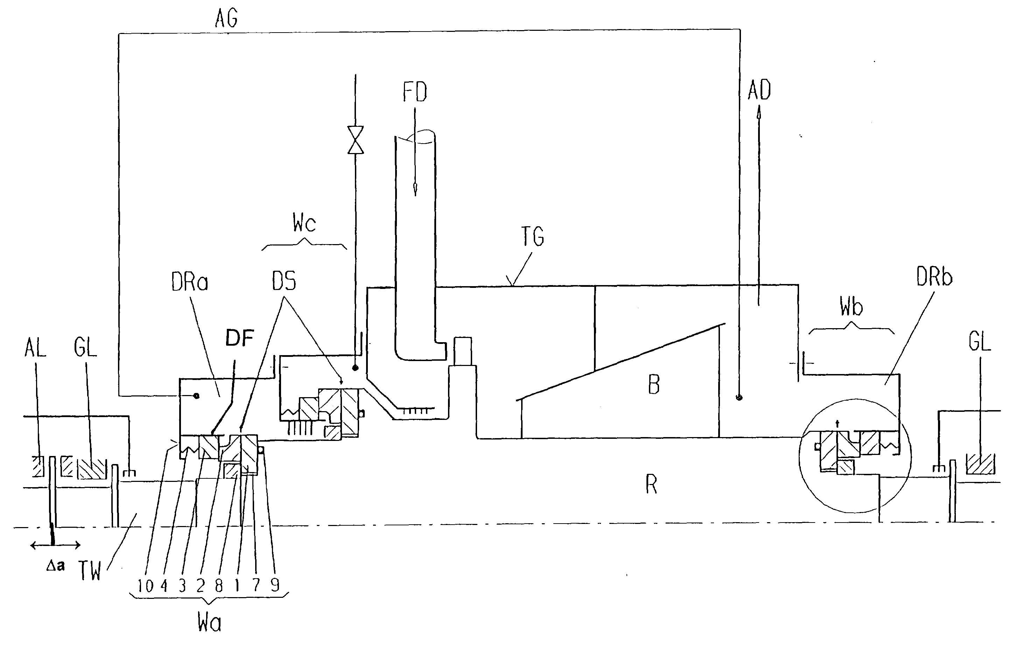

Aus der DE 44 22 594 A1 ist der Aufbau einer Gleitringdichtung für eine Turbine dargestellt. Es wird hierzu auf die einzige Figur verwiesen. Ein Rotor R mit seiner Beschaufelung B befindet sich in einem Turbinengehäuse TG und liegt mit seiner Turbinenwelle TW beidseitig in einem Gleitlager GL. Der Rotor besitzt mindestens ein Axiallager AL zum Auffangen von Axialschüben. In der schematischen Darstellung ist weiterhin die Zufuhr von Frischdampf FD und das Wegführen von Abdampf AD angedeutet.

Die Turbine weist drei für hohe Temperaturen geeignete Gleitringdichtungen Wa, Wb, Wc auf. Eine derartige Gleitringdichtung besitzt einen nicht rotierenden Gleitring 2, der beweglich durch eine Sekundärdichtung 3 mit dem Turbinengehäuse TG bzw. einem Dichtungsgehäuse 10 verbunden ist. Der Gleitring 2 wird durch Federn 4 über die Sekundärdichtung 3 an einen rotierenden Gegenring 1 oder die Turbinenwelle TW angedrückt. Zwischen beiden Ringen 1 und 2 liegt ein Dichtspalt DS. Aus Gründen der Formgenauigkeit wird der mit der Turbinenwelle TW rotierende Gegenring 1 mit einem elastisch wirkenden Zentrierelement 7 zentriert und durch ein Befestigungselement 8 gehalten. Eine Dichtkante oder ein Dichtring 9 verhindert eine Leckströmung zwischen dem Gleitring 2 und dem Rotor R.

Durch eine hochgenaue Gestaltung des axialen Dichtspaltes DS der Gleitringdichtung und mit einer speziellen Bemusterung an den sich gegenüberliegenden Dichtflächen, durch welche spaltöffnende Taschen mit einer Tiefe von wenigen Mikrometern entstehen, wird eine hydrodynamische Spreizung des Dichtspaltes erreicht und mit Unterstützung durch die Rotation des Gegenringes 1 werden dabei geringe Mengen des abzudichtenden Fluids durch die Dichtung (Hauptdichtung) gefördert

Zu den Gleitringdichtungen Wa, Wb gehörige Dichtungsräume DRa, DRb sind über eine Ausgleichsleitung AG miteinander verbunden. Die Gleitringdichtungen Wa, Wb sind hier von außen durchströmt dargestellt. Sie können auch von innen durchströmt eingesetzt werden. Wesentliches Konstruktionsmerkmal ist, daß die Ringe, insbesondere Gegenring 1, Gleitring 2 und Sekundärdichtung 3, ungeteilt sind und axial über die Wellenenden geschoben werden können.

Die Funktion einer solchen Gleitringdichtung (Hauptdichtung) wird wesentlich durch die Sekundärdichtung 3 beeinflußt, welche den radialen Spalt - in der Figur mit Dichtfläche DF bezeichnet - zwischen dem nicht rotierenden, jedoch gegenüber dem Turbinengehäuse TG beweglichen Gleitring 2 und einer hochgenauen Gehäuseringfläche (ringförmiger Gehäusesitz) verschließt. Die Sekundärdichtung 3 muß deshalb in der Lage sein, eine Relativbewegung des Gleitringes 2 zum Turbinengehäuse TG zuzulassen. Dabei muß sichergestellt sein, daß zur Einleitung dieser Relativbewegung keine allzu großen Kräfte auftreten, die wiederum die Funktion des eigentlichen Dichtspaltes DS zwischen Gegenring 1 und Gleitring 2 gefährden können.

Die Sekundärdichtung 3 ist der hochfrequenten Relativbewegung des mit Schwingungsbewegungen des Rotors R mitbewegten Gleitrings 2 ausgesetzt. Hinzu kommen nach längeren Betriebsperioden der Turbine axiale Relativbewegungen infolge der durch thermische Effekte bewirkten axialen Relativdehnung zwischen dem Rotor R und dem Turbinengehäuse TG. Da diese axialen Relativbewegungen je nach Betriebsweise der Turbine auch erst nach längeren Betriebsperioden eintreten, können zwischenzeitlich sich festsetzende Ablagerungen von Schmutzpartikeln in der Dichtfläche die freie Bewegung der Sekundärdichtung 3 auf dem ringförmigen Gehäusesitz behindern. Dadurch kann die Sekundärdichtung 3 festsitzen, was einerseits zur Folge hat, daß zu große Kräfte in dem fluidgestützten Dichtspalt DS zwischen Gegenring 1 und Gleitring 2 hervorgerufen werden. Andererseits kann der Gleitring 2 auch auf dem abzudichtenden Gehäusesitz festklemmen und dadurch an der Hauptdichtung oder an der Sekundärdichtung 3 einen zu großen axialen Spalt freigeben.

Die Folge einer solchen Fehlfunktion ist, daß lokal - zunächst begrenzt auf ein Umfangselement der Gleitringdichtung - eine hohe Leckage auftritt. Diese Leckage verursacht eine Erosion oder Korrosion der Dichtflächen des Dichtspaltes DS, die dadurch unbrauchbar werden und nach kurzer Zeit eine dauerhafte Fehlfunktion der gesamten Gleitringdichtung verursachen. Die Wahrscheinlichkeit der bei geringen Undichtigkeiten des Dichtspaltes DS eskalierenden Korrosion oder Erosion ist stark abhängig vom Strömungsmedium.

Der Erfindung liegt die Aufgabe zugrunde, eine Turbomaschine mit Gleitringdichtungen der eingangs genannten Art anzugeben, bei der Fehlfunktionen der Sekundärdichtungen und Gleitringdichtungen vermieden werden.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß durch die vorgeschlagenen regelmäßigen axialen Relativbewegungen zwischen dem Rotor und dem Turbinengehäuse vorhandene Ablagerungen an der Dichtfläche der Sekundärdichtung rechtzeitig abgerieben werden, ehe derartige Ablagerungen zu einem Schaden an der Gleitringdichtung führen können. Durch die regelmäßigen axialen Relativbewegungen wird insbesondere die freie Gleitbeweglichkeit der Sekundärdichtung aufrechterhalten und ein Festsitzen/Festklemmen der Sekundärdichtung verhindert.

Die Erfindung wird nachstehend anhand des in der Zeichnung dargestellten Ausführungsbeispieles erläutert. In der einzigen, eingangs bereits ausführlich beschriebenen Figur ist eine axiale Verschiebung Δa (Verschiebeweg) zwischen Turbinenwelle TW und Turbinengehäuse TG angegeben, durch welche zwangsweise und in regelmäßigen zeitlichen Abständen geringfügige Ablagerungen von der zylindrischen, fluidumspülten Dichtfläche DF zwischen Sekundärdichtung 3 und Turbinengehäuse TG oder Dichtungsgehäuse 10 abgerieben werden. Diese zwangsweise gesteuerten Relativbewegungen zwischen Rotor R und Turbinengehäuse TG können alternativ durch gezielt eingeleitete Wärmedehnungen oder durch hydraulische, mechanische oder andere Verschiebemechanismen - vorzugsweise am Axiallager AL angreifend - hervorgerufen werden.

Nach einer weiteren Ausgestaltung der vorgeschlagenen Einrichtung wird die aufzuwendende Gesamtkraft gemessen, welche zur Durchführung der zwangsweise gesteuerten Relativbewegung erforderlich ist. Die meßtechnisch erfaßte Gesamtkraft wird mit einem Referenzwert verglichen. Durch Vergleich von Meßwert und Referenzwert läßt sich in einfacher Weise der momentane Zustand der Sekundärdichtung 3 erfassen und überwachen. Wenn Meßwert und Referenzwert eine zu große Differenz aufweisen, ist dies ein Zeichen dafür, daß bereits relativ große Mengen an Ablagerungen vorhanden sind und die regelmäßigen zeitlichen Abstände zwischen zwei zwangsweisen Relativbewegungen werden verkürzt.

## Patentansprüche

1. Turbomaschine mit einem Frischdampfeingang (FD), einem Abdampfausgang (AD) und mindestens zwei gasgeschmierten Gleitringdichtungen (Wa, Wb, Wc) zur Abdichtung des Turbinengehäuses (TG) im Bereich einer den Rotor (R) tragenden Turbinenwelle (TW), wobei jede Gleitringdichtung einen mit dem Rotor (R) rotierenden Gegenring (1) und einen nicht rotierenden Gleitring (2) besitzt, der beweglich durch eine Sekundärdichtung (3) mit dem Turbinengehäuse (TG) bzw. einem Dichtungsgehäuse (10) verbunden ist, gekennzeichnet durch eine Einrichtung, welche zwangsweise und in regelmäßigen zeitlichen Abständen axiale Relativbewegungen zwischen Rotor (R) und dem Turbinengehäuse (TG) bzw. Dichtungsgehäuse (10) bewirkt.

2. Turbomaschine nach Anspruch 1, dadurch gekennzeichnet, daß die Relativbewegungen durch gezielt eingeleitete Wärmedehnungen bewirkt werden.

3. Turbomaschine nach Anspruch 1, dadurch gekennzeichnet, daß die Relativbewegungen durch einen hydraulischen Verschiebemechanismus bewirkt werden.

4. Turbomaschine nach Anspruch 1, dadurch gekennzeichnet, daß die Relativbewegungen durch einen mechanischen Verschiebemechanismus bewirkt werden.

5. Turbomaschine nach Anspruch 4 oder 5, dadurch gekennzeichnet, daß der Verschiebemechanismus direkt am Axiallager (AL) der Turbinenwelle (TW) angreift.

6. Turbomaschine nach einem der Ansprüche 1 bis 5, gekennzeichnet durch eine Einrichtung zur Erfassung der während der axialen Relativbewegungen auftretenden Kräfte und zum Vergleich dieser Meßwerte mit Referenzwerten.
